# EUROPEAN PATENT APPLICATION

(11) **EP 4 312 175 A1**
(43) Date of publication of application: **31.01.2024**
(21) Application number: 23181573.9
(22) Date of filing: 26.06.2023
(51) Int. Cl.: G06Q 30/0601, G06Q 10/0833

(54) **INTEGRATED SYSTEM AND METHOD FOR OPTIMIZING PROFESSIONAL AND INDUSTRIAL TOOL SUPPORT AND SHIPPING TIME**

(30) Priority: 25.07.2022 IT 202200015543
(71) Applicant: YG1 Italy S.r.l., 00134 Roma (RM) (IT)
(72) Inventor: PANDOLFI, Flavio, ROMA (RM) (IT)
(74) Representative: Fiammenghi, Eva

(57) **Abstract**

Integrated calculation system for optimizing professional and industrial tool support and shipping times, based on a relational database running on a local network computer with redundant storage and remote backup (100). The supplied software allows the customer via a specialized e-commerce site (101) to access the product catalog with filtering criteria and start the purchase procedure. Once the shipping operation has started, an automated package picking and preparation procedure is implemented in the warehouse, thanks to the optimization of the control software supplied with automatic lifts (102). Furthermore, in the warehouse there are a plurality of screens (103) adapted to guarantee a complete display of the status of the various shipments, notifying procedural anomalies by means of color graphics. Finally, a single interface (104) allows the customer to monitor the order and possibly change the shipping times directly from his/her mobile device.

## Description

### Field of the invention

The present invention relates to the field of company organization and has as its objective the improvement of existing processes, through an integrated software and hardware system, with original architecture, paying particular attention to optimizing shipping times and customer, supplier and tax document management.

### Prior art

Globalization requires companies to be constantly in step with new trends and to know how to adapt extremely quickly to market changes. The digital revolution certainly plays a key role in directing many businesses and making them more competitive, giving new impetus to various sectors. The real challenge for businesses, therefore, is to transform themselves by looking for new ways to sell their products and/or services. A good corporate strategy is upstream of any initiative designed to launch or support a business. No promotional tool, product or service, however innovative, can in fact replace a precise vision of the steps to be taken to achieve the result. Precisely for this reason, an integrated system with a single truth source has been implemented in this patent capable of managing a plurality of business processes and operations and in which a whole series of information coming from different web sources and services, both internal and external to the company, converge, integrate and is processed. By now, most companies delegate their management to digital operating systems capable of automatically directing and monitoring a whole series of processes. However, these systems, specific to each company environment, are often independent, and to interact with each other they need to switch from one system to another, with data transfer, as in the patent CN113283867A which describes an integrated architecture and a method of applying an integrated information platform. The integrated architecture includes a uniform interface management module, used to uniformly manage the interface services involved in a data center and various enterprise management systems, while the management module is used to perform centralized management on each business system after sending application data from each one. The integrated architecture ensures an efficient service and served relationship between the data center and business systems. Although this architecture ensures good communication between the various company systems and the data center, the originality of the present invention is that the central system created is able not only to integrate and manage the various company systems but is able to exploit and use in a specific and dedicated manner various external services, by merging the information internally, processing and integrating it for a unified, usable and efficient management.

There is no doubt, therefore, that these solutions only partially address the critical issues set out so far.

### Description of the invention

According to the present invention an integrated system is implemented, based on a single truth source which orchestrates the numerous processes which characterize the field of application of the invention. Said architecture is implemented by a plurality of software, aimed at increasing the automation of business processes, with the aim of ensuring: in the accounting area, the traceability of all company data and its management fluidity, in the shipping area, reliable and effective communication with the shipping distributor's software, making use of innovative original and personalized IT supports, and better customer management in the specific context of the sale of professional tools that effectively solves the above problems. The development of the global economy has changed the traditional balance between customer and supplier. The new information and communication technologies and the establishment of open global trade regimes have led to a series of changes: customers can enjoy a wider range of choices, their different needs can find greater expression and satisfaction and the alternatives of supply are multiple and more transparent. In order to be more competitive, a company must excel not only in product innovation, but also in the design of its organizational models, in understanding customer needs and new technological trajectories. If a business model has unique features, is original, difficult to imitate, effective and efficient, it will be more likely to generate profits. The present invention proposes an integrated information system, or central database, which interacts with a plurality of systems relating to customers, suppliers and patterns such as Google, Cerved, etc., with which information is shared to obtain their specific services in return. Finally, it makes use of additional software aimed at speeding up the operating times relating to shipments by offering superior results compared to the prior art of the competition in the field of professional tools. By exchanging information with a series of applications and systems, the integrated central system is able to automatically monitor a set of processes that are essential for efficient management of relations with customers and suppliers. This system, for example, interacts with Google Maps, and through an exchange of data it is possible to carry out a geographical sales analysis even for a single product. The integration of the specific territory mapping system, useful for carrying out strategic marketing, includes about twelve thousand addresses marked with different symbols and colors according to their function: distributors, suppliers, end customers, etc. and a filtering system so that a sales executive can schedule his/her sales and customer service tour based on the information provided by the integrated geographic mapping system. The originality in this case consists in that the software model of the present patent manages to integrate the Google mapping service with specific information of interest to the company and its business, if, for example, a salesperson has a certain sample collection, by consulting the specific app, directly on his/her mobile device, he/she can identify in real time the customers who may be interested in his/her vicinity and thus optimize the presentation and sale times of the products, the salesperson will no longer have to look for the possible customers in certain market areas but with this new system it will be the information that will reach the salesperson him/herself, thus optimizing the routes and consequently the sales times.

Furthermore, to make better decisions, a data-driven approach has been put into practice, a plurality of information has been collected, in the order of hundreds of megabytes of material, to then be processed by the central software which made it possible to carry out an integrated analysis and to make a series of considerations in order to improve services and map the territory. Through a statistical analysis of the information, it is possible to establish the areas where, on average, a certain type of product is most in demand, in this way it is possible to create promotional campaigns via personalized e-mails that satisfy the specific requests for industrial tools of a specific type of customer in a specific geographical area. This system is provided with a very advanced reporting system, connected to a series of Google data analysis tools, which allows you to make a predictive analysis based on feedback information from sales experiences. The significant contribution that this integrated system provides, for example to sales personnel, is to make a series of data useful for one's specific job usable in a simple, clear and real-time manner. The company staff specialized in sales actually has a very advanced technical training but is less commercially prepared. In order to improve this aspect, it was decided to provide salespersons with a series of technological supports to enhance their commercial skills. An in-depth analysis was therefore carried out of the various CRMs (Customer Relation Management) which proved to be useful for implementing the commercial aspect of the company, and in particular a customized CRM for sales staff which integrates a whole series of information, starting from the data relating to the customer, the technical data of the products, up to a plurality of information coming from sources external to the company, with which it interacts, to present the staff with a general and exhaustive picture when he/she has to relate with the client. An access to the web has been created and at the same time an access to the sales staffs personal mobile device, so that there is continuous communication with the two worlds. The staff have at their disposal an original mobile application created specifically in the present patent, with a collection of menus, which allows them to view a plurality of information, when the mobile number of the customer who is calling, registered by the management software system, is displayed. They can therefore have a general picture of the customer's situation directly on their mobile device: when the salesperson is contacted by a customer, the software recognizes the customer's telephone number and in real time provides the salesperson with a whole series of information, which can be viewed on the screen of his/her mobile phone, useful for carrying out his/her work, such as, for example, the customer's history with his/her personal data, the last order placed, what he/she is billing, the status of shipments, undelivered goods, if there are therefore late orders, what type of products the customer who contacted him/her mainly deals with and those that on average have been previously purchased. In this way the salesperson, without having to search for the information relating to the customer in question, receives it directly from the app with immediate viewing. Furthermore, the app allows the salesperson to follow the delivery of an order in real time and view the position of the courier, to ensure the customer all the information useful for his/her order. Not only that, through the Tool Selector technology, the salesperson can select the product of interest in a maximum of 4 steps, among the many present in the sales catalog registered in the data center, and view all the technical features and its functioning, sharing in time real from his/her device to the customer's device, if the customer asks for clarifications regarding the product he/she has purchased or intends to purchase. This technology turns out to be very useful in sales management because very often the salespersons have to follow dozens of customers at the same time, in this way the implementation of technical knowledge by the salespersons or the storage of a large number of specific products is not required, this function will be performed by the automatic system giving a strong technical and professional support to the salespersons. The primary object of the present invention is precisely that of generating an original and customized software for a tool company which is able not only to implement the commercial part with technological support but also to centrally manage a whole other plurality of functions, necessary for its proper functioning: such as the management of couriers, the management of machinery, alerts, company procedures, the management of data from Cerved, the organization of external officials for good management, i.e. an optimal company procedure organization that allow them to carry out their work effectively and efficiently. All this information has been collected, structured and processed to build a software model capable of integrating and managing it in its entirety and complexity. The present database also includes a sophisticated company monitoring system: the company procedures are all contained in the various tasks of the database, which by carrying out a series of integrated checks is able to notify specific personnel if there are anomalies in the management and to send a request for specific intervention, if necessary. If, for example, in the context of company administration there is a missed order, the software system records the negative in the order, and sends, via e-mail, a notification to highlight the lack and place the correct order that compensates for the recorded anomaly. Even commercial officials receive notifications of anomalies in the organizational system directly by e-mail, without having to carry out checks and verifications on all the procedures, so as to intervene only on those highlighted by the system which need to be checked and need a direct intervention. A general web service has been created where the various management programs can be interfaced. In fact, each company has its own management program which differs from the others, for example the resellers of corporate products have their own management program which is different from that of the manufacturing company. The present web service is an open system that is able to communicate with different management systems: if, for example, a producer (product user customer) loads an order on his/her management system, the web service, which is always listening, receives the order from the manufacturer's system, computes it and transmits it to the distributor's system which follows it, thus managing the order using a third of the time and resources. Not only that, the originality of the present system also lies in that it is able to provide information on the entire stock in the warehouse, on the status of the couriers, on the status of the shipments, etc.; all this data is shared in real time, thanks to the integrated software system, with a plurality of both internal and external applications, such as services integrated with the European warehouse, computational systems, filing systems, calendars, specific mapping systems integrated with Google Maps, thus creating an automated digital world capable of fully managing the customer, in particular by focusing on distributors. The integrated software system that collects data from various sources in real time, such as, for example, data provided by couriers to e-commerce, can also be of support to the customer. In fact, it provides a series of information that can be accessed by the customer him/herself, giving him/her the possibility of viewing it in real time, simply by clicking on his/her own dedicated area. He/she can simply access the shipping agent code, the status of the goods, the unfulfilled goods, the ones that can be anticipated, he/she can also decide to modify the delivery times, i.e. he/she can decide whether to anticipate or delay his/her order, etc. The object of the present patent is therefore the creation of a single integrated system, i.e. a single source from which a plurality of services branch out, so as not to have the need to access and switch from one program to another or transfer data, with the risk of losing it, but any operation carried out must refer to the opening of a single program, the central database, to which other programs integrated with the database itself are interfaced. If, before the present invention, orders were placed by telephone, fax or e-mail, which necessarily had to be followed by a confirmation the day after and only the day following the confirmation, the orders could be processed, thus multiplying the hours from the moment of the order to its delivery, with the creation of a web portal, an e-commerce, through the development of a new non-existing product tailored to the needs of the company itself, it has been possible to find and fulfill orders simultaneously upon insertion. An analysis was made of various automatic warehouse solutions and an optimal solution emerged, with the technical contribution of the Modula companies, which creates complete automations, i.e. a system of lifts with drawers managed by warehouse software integrated with the central database which allows one to pick the piece, reducing the handling and packaging time of the piece by about 90%. Furthermore, all the customer addresses are entered in the database, which interfaces directly with the couriers' web service, and to further reduce delivery times, the company's logistics office is located near the couriers, so as to be able to deliver, through these, the goods within twenty-four hours from the order which can be accepted until 19:00. Furthermore, through the integrated system, it is possible to manage destinations with address verification: if, for example, the address is incorrect, the system detects it immediately by not loading it, and notifies it, making it possible to correct it in real time without waiting for a negative return from the courier, which only after some time could realize that the address is incorrect. To manage the entire automated organization of order taking, packing and shipping, a color coding and graphics system was developed with screens located in various points of the company, such as in the warehouse, which help the employees responsible for the sector to be updated in real time on all processes in progress. These screens were then transformed into graphical interfaces of the management system, where, for example, a green line notifies that the process in question is developing without problems, while an orange or red color notifies critical issues that need verification and interventions, in this way the employees do not have to carry out a general verification of the processes but can concentrate only on those notified by the integrated automated management system. For customer management, this system relies on Cerved which is able to probe and establish customer reliability, monitoring the risks inherent in commercial relations, not only providing data regarding legal or economic problems of registered customers, but also payment habits of the same with other patterns, through a series of values and indices, processed starting from a whole series of data from various sources, such as information from other suppliers that signal a payment delay of the customer in question or bank insolvency notifications. All of this information is received, integrated and processed by the management system, so that the company is able to pre-select only customers who are historically solvent, avoiding outstanding debts and consequently obtaining credit from banks because they are a reliable company. All the information coming from Cerved is collected in a folder on the central server, where it is read, processed and finally collected in a summary mask, thus filtering the amount of data supplied by Cerved, saving control time data from Cerved and beyond. A further tool, to manage all the information coming from the plurality of sources, is an internal mailing system which takes care of managing the daily control mails coming from internal processes, from Cerved or from couriers in case there is some anomaly or criticality in shipments or machinery. The internal mailing system is interfaced with an alert, reminder and control system which keeps a whole series of information under control, in the form of algorithms and logics which govern all the processes that take place in the company, such as for example: the control of customers without Status, control of items that are out of stock, control of widespread warehouses (located in strategic areas of the territory), stock of catalogues, etc. This reminder alert system created specifically for each department of the company keeps every operation under control by promptly notifying deficiencies, defects, delays or malfunctions, depending on the controlled area. Also in this case it is not the specialized operator who has to look for and verify the proper functioning of the processes, but it is the integrated system which supplies him/her with the specific and useful information for effective and complete monitoring of his/her work. Finally, it was decided to create an Academy for personnel training, which has the objective not only of providing information on the type of products made but also on the production processes, because very often educational institutions are lacking in the training process as there is a gap between the teachings provided, very often very theoretical and impractical, and the technical skills that are actually needed in the work world.

The advantages offered by the present invention are clear in the light of the above description and will be even more apparent from the accompanying figure and the related detailed description.

### Description of the figures

The invention will hereinafter be described in a preferred embodiment thereof by way of non-limiting example with the aid of the accompanying figure, in which:

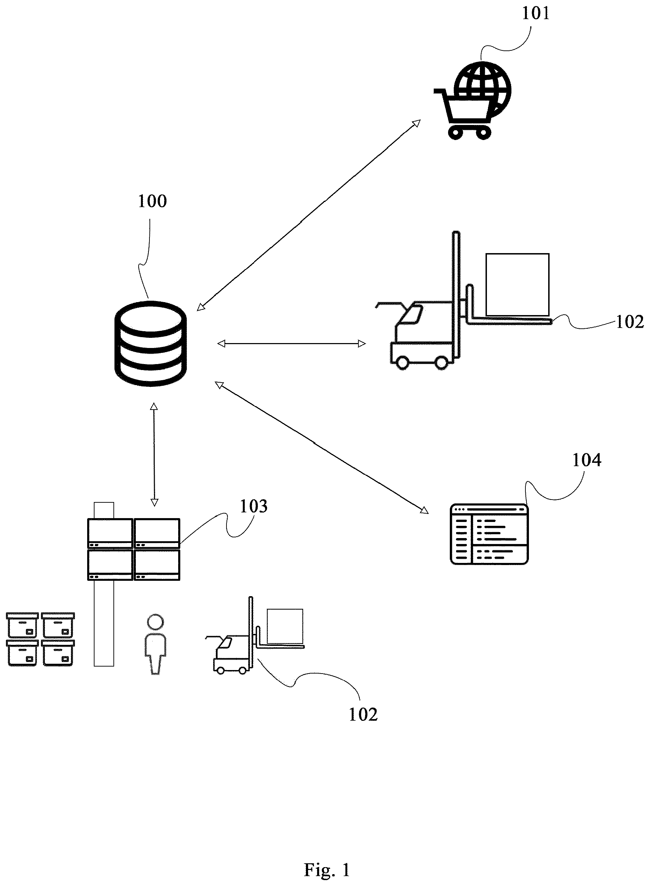

- FIGURE 1 shows the main components of the system object of the present invention. The figure shows a plurality of screens 103, which represent the physical place where the main automatic operations of the new integrated method for optimizing professional and industrial tool support and shipping times are carried out. Said screens 103 are located in the company's warehouse and allow the status of the various shipments to be displayed, with color coding, allowing the warehouse personnel to provide and focus on the error statuses. The hardware architecture underlying the invention consists of a computer, which mainly executes database management software, which supports procedures 100. Said computer is adapted to use supplied software to implement the various logical steps which make it up. After the customer has accessed and chosen the product suggested by specific filtering criteria from the product catalog through the specialized e-commerce site 101, he/she completes the purchase, thus starting the shipping procedure. The supplied control software manages to optimize the times of a plurality of lift machines 102 capable of making the system more efficient by reducing the preparation times of the parcels to be sent by 90%. The figure also shows a single interface 104, adapted to allow the customer to send commands for monitoring or modifying the shipping times during the service.

### Detailed description of the invention

The present invention will now be described purely by way of non-limiting or binding example with the aid of the figure, which illustrates some embodiments relative to the present inventive concept.

With reference to FIG. 1, it shows the main component elements of the present integrated method. Said method for optimizing professional and industrial tool support and shipping times is based on a central computer which runs the management software of a relational database 100, represented in the figure. The computer has been designed to be efficient in total ownership costs and at the same time to satisfy all the application needs of the system. In particular, the use of a redundant and high-performance storage system is claimed to support data persistence and resilience, such as, for example, through RAID technology, at the same time it was decided to guarantee disaster recovery measures through periodical backups in distant buildings. Avoiding the ownership costs of contracts with Cloud providers allows one to optimize the costs of the invention compared to possible existing solutions. Access to employees is also guaranteed outside the company buildings for tasks that require it after using VPN software. The method associated with the system is based on a supplied software which allows the customer to access the product catalog via the specialized e-commerce site 101, implemented by specific filtering and search criteria for professional tools. Once the customer selects and proceeds with the purchase of the products of interest, the shipping procedure is started. Inside the warehouse the preparation of the shipping package begins, which thanks to the optimization of the control software supplied with a lift machine 102, the times of this operation are reduced by about 90%. The warehouse is also provided with a plurality of screens 103, adapted to allow specialized warehouse personnel to view the status of the various shipments, by means of a color coding, such as to encourage the staff to concentrate on the statuses which are in error. Finally, the figure illustrates a single interface 104 adapted to guarantee the monitoring of the order status to the customer and to send, via a suitable service, commands for modifying the shipping times. Finally, it is clear that modifications, additions or variants may be made to the invention described thus far which are apparent to those skilled in the art, without departing from the scope of protection that is provided by the appended claims.

## Claims

1. Integrated calculation method for optimizing professional and industrial tool support and shipping times, **characterized in that** it is based on a single truth source implemented through a relational database installed on a specific computer with redundant local storage and with remote periodic backup storage, connected to the local network of the user company, **and in that** it comprises the following steps:
A) the customer accesses the product catalogue through a specialized e-commerce website (101) with specific filtering and search criteria for professional tools;
B) with purchase completed, prior to preparing the shipment, credit reports of the customers processed by third parties are interpreted by means of a software and an alert is sent to a management office should a problem be detected;
C) a shipment procedure is started: by optimizing the control software fitted in a lift machine (102), the times required to prepare the shipping package are reduced by 90%;
D) when carrying out automated operations, the status of the various shipments are shown with color coding by means of special screens (103), therefore allowing the warehouse staff to focus on the error status;
E) during shipping, an appropriate service allows the customer to send commands at least adapted to: change shipping times at will, monitor the status of the order irrespective of the shipping provider, through a single interface (104).

2. Integrated calculation system for optimizing professional and industrial tool support and shipping times, **characterized in that** it is at least adapted to carry out the method of the preceding claim 1 **and in that** it comprises:
- a computer device (100) with redundant local storage and with remote periodic backup storage, adapted to run an appropriate software specifically configured to optimize professional and industrial tool support and shipping times;
- said specialized e-commerce website (101) with specific filtering and search criteria for professional tools, is adapted to allow a user to place an order;
- said lift machine (102) provided with an appropriate control software adapted to facilitate the retrieval of the material subject of shipment for completing the package to be shipped;
- said screens (103) being adapted to show to the designated staff the status of the various shipments;
- a mobile application for said user, provided with a single interface (104) configured to allow said user to at least change the shipping times at will and monitor the status of the order.

3. Integrated calculation system for optimizing professional and industrial tool support and shipping times, according to the preceding claim 2, **characterized in that** it comprises an automation software for tax management.

4. Integrated calculation system for optimizing professional and industrial tool support and shipping times, according to any one of the preceding claims 2 or 3, **characterized in that** it comprises an application software adapted to allow the sales and customer support staff, to view - on a mobile device - the customer's history, the data thereof, by starting the application and executing the filter per customer automatically recognizing the telephone number of the customer during the call.

5. Integrated calculation system for optimizing professional and industrial tool support and shipping times, according to any one of the preceding claims 2 onwards, **characterized in that** it comprises a strategic marketing mapping system, through the position of the customer and customer information database, which can be accessed by the sales staff so as to minimize the visit paths of potential new customers on the map.

6. Integrated calculation system for optimizing professional and industrial tool support and shipping times, according to any one of the preceding claims 2 onwards, **characterized in that** it comprises a software for interpreting the availability of shipping suppliers by recipient addresses, optimized and trained to recognize possible failed deliveries in advance.
